# EUROPEAN PATENT SPECIFICATION

(11) **EP 3 031 712 B1**
(45) Date of publication and mention of the grant of the patent: **22.11.2017**
(21) Application number: 14382503.2
(22) Date of filing: 10.12.2014
(51) Int. Cl.: B64C 3/18, B64C 5/02

(54) **Horizontal tail plane and method for manufacturing said horizontal tail plane**
Höhenleitwerk und Verfahren zur Herstellung des besagten Höhenleitwerks
Empennage horizontal et procédé de fabrication dudit empennage

(43) Date of publication of application: 15.06.2016
(73) Proprietor: Airbus Operations, S.L., 28906 Getafe (Madrid) (ES)
(72) Inventor: Maestre Derqui, Fernando, 28906 Getafe (Madrid) (ES); Ramirez Gallardo, Sebastian, 28906 Getafe (Madrid) (ES)
(74) Representative: Carpintero Lopez, Francisco

(56) References cited:
- EP-A1- 2 738 086
- EP-A2- 2 786 932
- DE-A1-102004 058 910
- US-A- 1 435 244

## Description

### Object of the Invention

The present invention refers to a horizontal tail plane (HTP) or horizontal stabilizer of an aircraft, and more in particular, to an integrated structure of the ribs shaping the mid - box and the trailing edge.

Also, the present invention refers to a manufacturing method for the horizontal tail plane of the invention.

### Background of the Invention

As it is well known aeronautical structures require the integration of various structural elements in such a manner that there is an efficient transmission of load between them.

Some years ago, when metal materials were used, mechanical joints were the only option for integrating the various structural elements. However, nowadays, most of the structure is formed by composite materials with an organic matrix and continuous fibers principally based on epoxy resins and carbon fibers, such as CFRP (Carbon Fiber Reinforced Plastic).

One of the structures where transmission of loads is critical is the horizontal tail plane or HTP, which placed behind the main lifting surfaces provides stability and control and, in addition, helps for adjusting the center of pressure and gravity caused by changes in speed and altitude.

Particularly in the case of horizontal tail planes, they must behave like a structural unit so that all the elements of which they are formed are subjected to both aerodynamic loads and loads generated by the mechanism used to trim the horizontal stabilizer.

Elements that must be joined to form a structural unit in horizontal tail planes are, basically, a mid - box and trailing and leading edges, along with control surfaces.

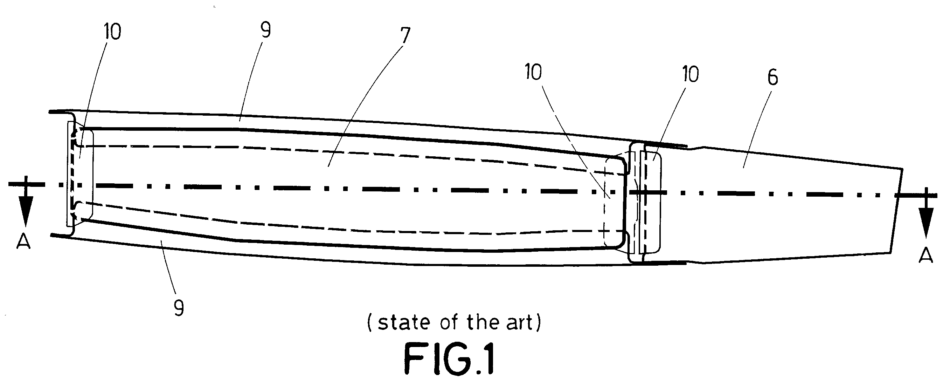

Figures 1 to 4 show different views of an example of HTP as they are known in the state of the art, where more precisely can be seen the following:
- Mid - box (1) forms the structural support for upper and lower skins, which are stiffened by longitudinal stringers, a front spar (2) and a rear spar (3), and transverse ribs attached between the front (2) and rear (3) spars and the upper and lower skins are provided, in order to keep the mid - box (1) shape and reinforce the load areas linked to the aircraft and to the actuators for handling the HTP control surfaces.
- The leading edge (4) is the structure responsible for keeping the aerodynamic surface with the mid - box (1) surface, for supporting the static or cyclic structural loads involved and for protecting the mid - box (1) from bird impacts. It is the part of the HTP surface that first contacts the air and the foremost edge of the airfoil.

Known leading edge (4) comprises several ribs called leading edge ribs, attached to the front spar (2) of the mid - box(1) and an aerodynamic profile attached to the leading edge ribs and to the flanges of the front spar in order to keep the overall aerodynamic shape of the HTP.
- The trailing edge (5) is its rear edge where the airflow separated by the leading edge rejoins. Essential control surfaces are attached here to redirect the air flow and exert a controlling force by changing its momentum.

The trailing edge (5) comprises also several ribs called trailing edge ribs (6) attached to the rear spar (3) of the mid - box (1), and an aerodynamic profile (8) attached to the trailing edge ribs and to the flanges of the rear spar (3) in order to keep the overall aerodynamic shape of the HTP between the mid - box and the control surfaces.

Thus, it is obvious that the manufacturing process of the horizontal tail planes (HTP) includes several parts with different manufacturing process and therefore assembly process must be carried out in different and separate steps.

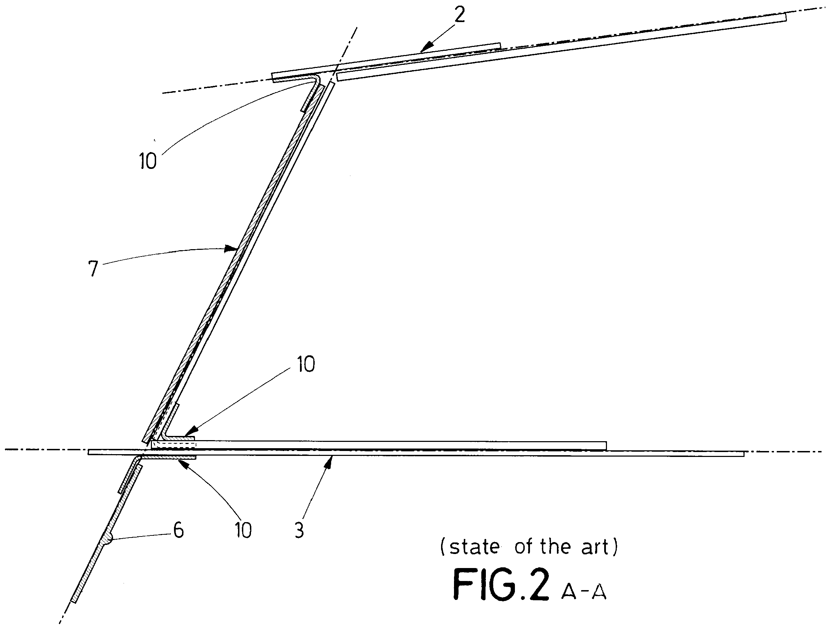

Specifically, Figures 1 and 2 shows how mid - boxes and trailing edges are commonly joined in the state of the art, where the following parts must be assembled:
- A front spar (2) and a rear spar (3),
- A mid-box rib (7) attached between the front (2) and rear (3) spars,
- Two T-shaped profiles (9) to attach the mid-box rib (7) to the covers for both upper and lower skins,
- A trailing edge rib (6) attached to the rear spar (3) to support the trailing edge panel and the tip end (not depicted), and
- Three L-shaped profiles (10) to:
   ∘ join the mid-box rib (7) to the front spar (2),
   ∘ join the mid-box rib to T-shaped profiles (9) and rear spar (3), and
   ∘ join the rear spar (3) to the trailing edge rib (6).

The actual techniques for assembling all these parts basically comprise the following steps:
- First, aerodynamic header boards are set in place for both upper and lower skins.
- Then, covers are aligned to the header boards by means of jacks.
- Upper and lower T-shaped profiles are attached to the covers using clamps; Finally, using pilot holes in the T-shaped profiles drilling operation of the covers drilling is carried out.
- After this task is finished, mid-box rib is located and clamped to both upper and lower T-shaped profiles. Using pilot holes in the rib, the interface of rib to T-shaped profiles is drilled and reamed, installing temporal slave fasteners according to the needs of the operation.
- Once all holes have been drilled, reamed and countersunk when required, parts are dis-assembled, bonding areas on the skins are made and the parts are deburred and cleaned, prior to undertake the sealing tasks.
- First sealant is applied on the interface T-shaped profiles to skins, and they are finally assembled and bolted. Second the worker spreads sealant on the interface mid-box rib to T-shaped profiles and the mid-box rib is installed and bolted. In both cases temporal fasteners are used during the bolting tasks.
- In a different later station, the trailing edge rib is installed following several steps:
   ∘ to start, locating the blade plane of the trailing edge rib over a tool located in a jig;
   ∘ locating the lower part of the trailing edge rib over a different tool in a jig ensuring the trailing edge of the rib; and
   ∘ interfacing with the mid-box, together with a bonding flat aluminium part the rib is located and the gaps between the rib and the midbox upper and lower interface are measured, installing shim to fill in the measured gaps.
- One hole is drilled in each skin and the trailing edge rib is clamped to the skins through these holes. At this point an L-shaped profile is preinstalled and shimmed to the trailing edge rib.
- Then the interface trailing edge rib and L-shaped profiles are drilled and reamed.
- Afterwards, the parts are dis-assembled, shim edges are cleaned, holes are deburred, and everything is cleaned prior to the bolting operation.
- Both parts are then bolted.
- After the bolting operation the trailing edge is drilled and reamed to rear spar, and the subassembly (trailing edge rib + L-shaped profile) is dis-assembled to bring the mid-box to the automatic drilling station.
- In the following station, the subassembly (trailing edge rib + L-shaped profile) together with a bonding plate are finally assembled and the trailing edge is bolted to rear spar;
- Finally, in a later station the interface trailing edge rib is bolted to skins. EP 2 738 086 A1 discloses a horizontal tail plane of the prior art, with a main supporting structure comprising upper and lower faces defining its aerodynamic profile, leading and trailing edges, a set of ribs joined to a rear spar by a foot and extending to the leading edge region across a front spar, and another set of ribs crossing the front spar and the rear spar and joined to them by four angles or cleats.

As can be easily deducted from the above, the state of the art has several disadvantages that the present invention is intended to overcome, namely:
- Excessive weight due to all the parts to be assembled.
- High manufacturing costs because of the high number of parts to be assembled, which implies to use different technologies and tools and spending a high amount of time due to the assembling processes and also to the curing time required for each different part.
- Also, the high number of parts implies high quality check costs.
- As not all the different parts are manufactured by the same companies / factories stock costs increases.

Apart from all these disadvantages due to the high number of elements to be assembled, a major problem with the horizontal tail planes from the state of the art arises. This problem is a misalignment caused by the curing process of the composite materials with which upper and lower covers are made. More precisely, this misalignment occurs because once the curing process is finished, the so-called spring-back effect appears that causes geometrical inaccuracies of parts, making the cover contour more concave than it should be.

More precisely, this known effect is due to the anisotropic nature of fibre-reinforced polymer matrix composite materials, which often causes residual stress build-up during curing processing, and subsequent warpage of the composite part when it is removed from the mould.

Thus, the relaxation of residual stresses cause flat sections to warp and enclosed angles to "spring-back". In high performance applications such as in the aerospace industry, process induced warpage needs to be compensated for when designing the tool to avoid problems with fit-up in the assembly of the aircraft. However, because of a strong aversion to introducing stresses in the structure during assembly, the clamp-up forces allowed to join up different parts are usually very small. This means that even a little warpage and spring-in can have severe implications in assembly.

Moreover, this effect is to some extent unpredictable due to the non-linear behaviour of most composite processes due to the exponential nature of the cure kinetics of most resin systems, making it an issue to keep in mind and hardly avoidable when manufacturing, among others, horizontal tail planes.

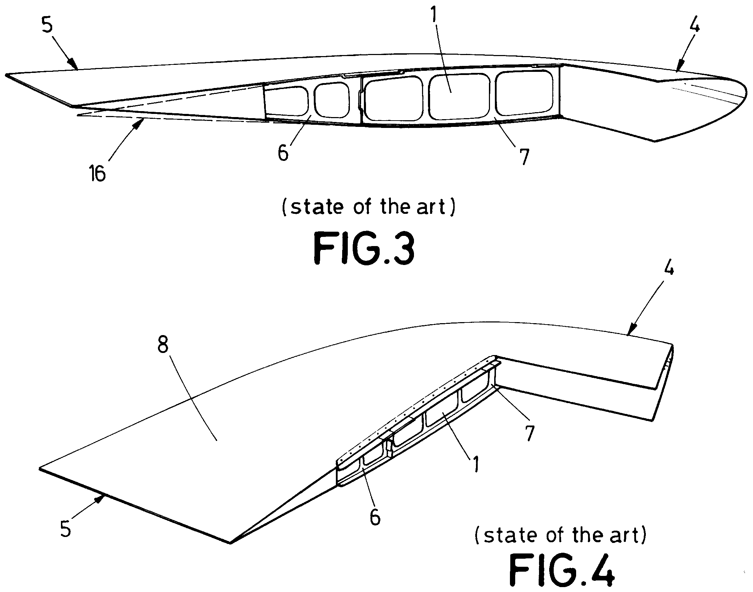

Thus, this misalignment affects to the structure in two different ways:
- As can be seen in Figure 3, a first misalignment problem occurs between mid - box and trailing edge. When there are several parts, trailing edge rib is not in the same line with the mid - box and this misalignment affects to the tip assembly. More precisely, the tip contour mounted over the trailing edge suffers a misalignment, i.e., a deviation from the theoretical aerodynamic contour (16) as can be seen in said Figure 3.
- Also, as can be seen in Figure 4, said misalignment between the mid - box and the trailing edge implies that the line of drilling holes of the trailing edge rib deviates, leaving that line out of the required distance to the edge.

### Description of the Invention

It is therefore the object of the present invention to provide a horizontal tail plane and a method for manufacturing it that solve the drawbacks of the state of the art mentioned above insofar as it eliminates the misalignment problems between mid - box and trailing edge due to the spring-back effect, at the same time that reduces time and cost of manufacturing as well as the weight of the assembly.

More precisely the horizontal tail plane of the present invention is defined in claim 1, and comprises:
- A leading edge;
- A trailing edge;
- Upper and lower skins including a part of the aerodynamic profiles of the leading edge and the trailing edge:
- A mid-box that forms the structural support for upper and lower skins comprising a front spar and a rear spar;
- Leading edge ribs attached to the front spar of the mid - box and to the aerodynamic profile of the leading edge; and
- A one piece main rib attached to the front rear spar of the mid - box with a length that exceeds the distance between front and rear spar.
Therefore, mid-box rib and trailing edge rib are now provided as a single main rib so that the spring-back effect on upper and lower covers, i.e., the warpage of upper and lower covers does not provoke the misalignment of the trailing edge rib with respect to the mid-box rib of the mid-box, i.e., the deviation from the theoretical aerodynamic contour and the real tip contour mounted over the trailing edge is avoided.

According to the other aspect of the invention, which is defined in claim 5, manufacturing process of the horizontal tail plane is significantly simplified with respect of the state of the art. This is mainly due to two main characteristics of said process, namely:
- Manufacturing the mid-box rib and the trailing edge rib in one single piece to form a main rib with a length that exceeds the distance between front and rear spar.
   Apart from avoiding the spring-back effect and thus the deviation of the of the tip contour mounted over the trailing edge as it was explained before, this characteristic achieves a simplification of the structure resulting in a reduction of assembly time. For example, the fact of having the main rib in a single piece eliminates all former operations of locating, clamping, drilling, etc. the trailing edge rib are no longer needed.
- Manufacturing the main rib with an H-shaped profile so that upper and lower skins of can be joined directly to the parallel arms of this H-shaped profile.
   This way, tasks carried out before to join mid-box rib to T-shaped profile are no longer necessary so that no drilling, no dis-assembling, no cleaning, no sealing, and no bolting are needed anymore.

All this simplification on the manufacturing process of the horizontal tail plane of the invention will therefore allow to:
- Reduce the aircraft weight eliminating elements such as bolts and optimizes the loads path - more feasible with one only part. Also, reducing the number of elements results in reducing load and efforts calculations, saving time.
- Reduce the aircraft manufacturing cost with respect of conventional HTP because manufacturing seven different parts with different technologies requires more time than manufacturing only one larger part with only one technology.
- Reduce the aircraft assembly cost by using less tools and reducing the assembling time.
- Reduce the lead time. With a solution with several parts there are some adjustments to carry out applying supplements during the assembly. More precisely, the use of adjustment fluids that need a curing time can been avoided, reducing lead time.
- Reduce the time spent in curing cycles by reducing them to only a curing cycle.
- Reduce the quality check cost due to the fact that the manufactured parts are also reduced, and finally
- Reduce the stock and control costs by having only one supplier, contrary to what is done at present, where several parts forming the structure are manufactured by different factories/companies.

### Description of the Drawings

To complement the description that is being made and for the purpose of aiding to better understand the features of the invention according to a preferred practical embodiment thereof, a set of drawings is attached as an integral part of the description in which the following is depicted with an illustrative and non-limiting character:
- Figure 1 shows a schematic elevation view of the union of the mid-box and the trailing edge rib of a horizontal tail plane HTP according to the state of the art.
- Figure 2 shows a sectional view of figure 1.
- Figure 3 shows a sectional view of the union of the mid-box with the trailing edge rib through the rear spar of a HTP of the state of the art, where deviation between theoretical aerodynamic contour and real contour of the tip mounted over the trailing edge has occurred due to the spring-back effect.
- Figure 4 shows a perspective view of the union of the mid-box with the trailing edge rib where misalignment or deviation of drilling holes of the trailing edge rib from the edge can be seen.
- Figure 5 shows a schematic elevation view of a horizontal tail plane HTP according to the present invention.
- Figure 6 shows a sectional view of the horizontal tail plane of figure 5.
- Figure 7 shows a perspective view of the main rib of a horizontal tail plane HTP according to the present invention.
- Figure 8 shows another perspective of the main rib of a horizontal tail plane HTP of Figure 7.
- Figure 9 finally shows the perspective of figure 8 where rear and front spar have both been attached to main rib.

### Preferred Embodiment of the Invention

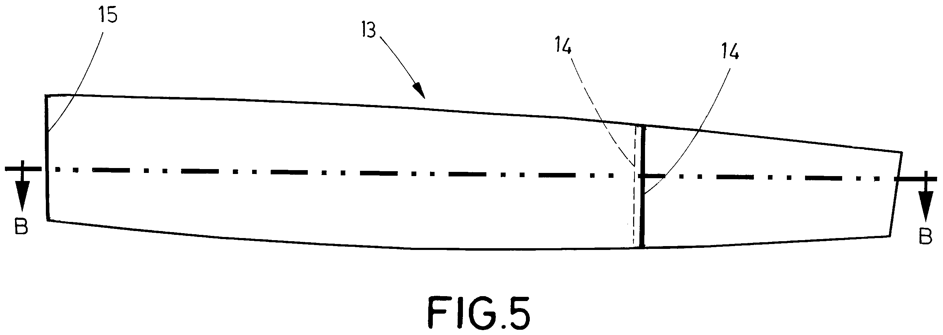

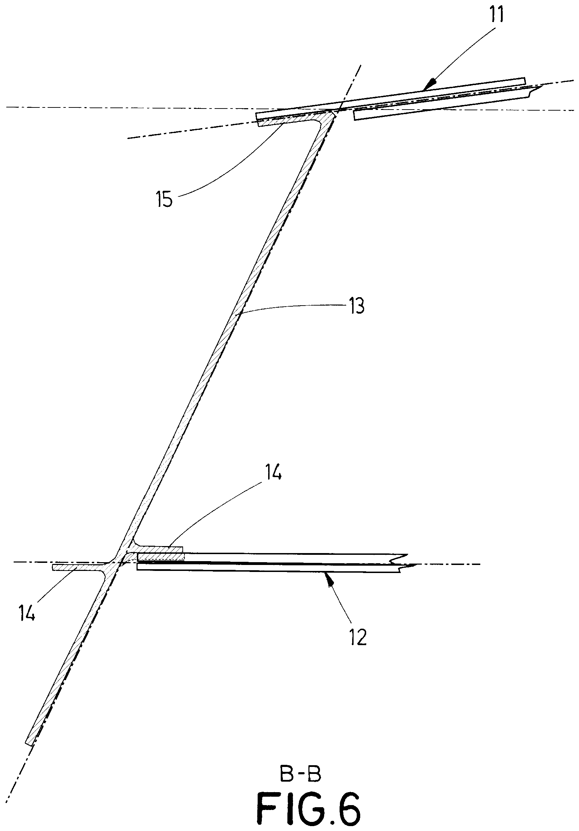

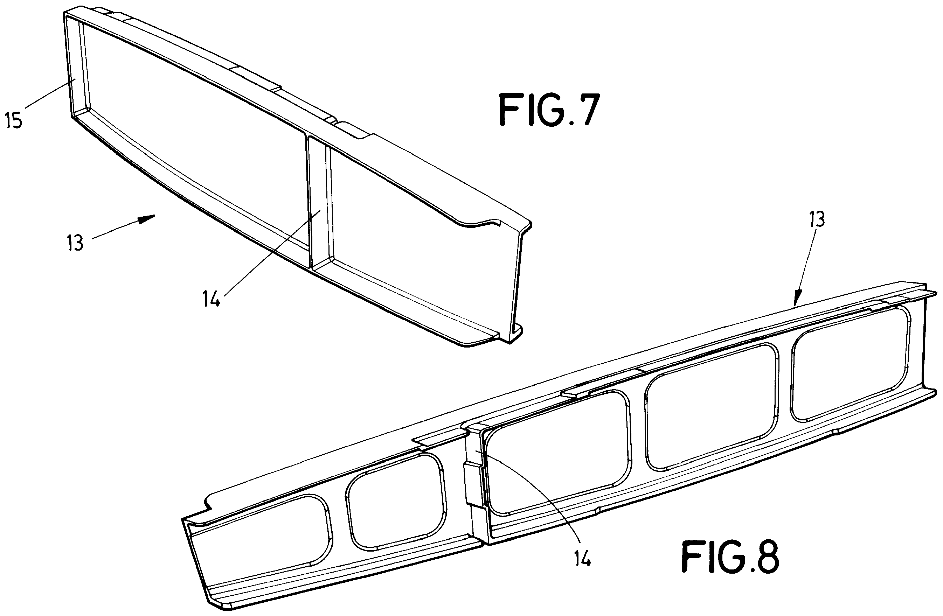

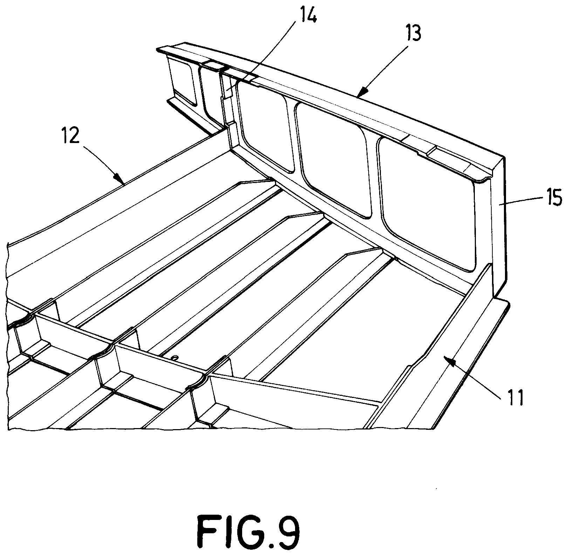

According to one preferred embodiment of the invention shown in figures 5 - 9, the horizontal tail plane of the present invention comprises:
- A leading edge;
- A trailing edge;
- Upper and lower skins including a part of the aerodynamic profiles of the leading edge and the trailing edge:
- A mid-box that forms the structural support for upper and lower skins comprising a front spar (11) and a rear spar (12);
- Leading edge ribs attached to the front spar of the mid - box and to the aerodynamic profile of the leading edge; and
- A one piece main rib (13) formed by an H-shaped profile attached to the front (11) and rear (12) spar of the mid - box with a length that exceeds the distance between front spar (11) and rear spar (12).
According to one possible embodiment, the rear spar (12) can be formed by two pieces so that each one of them is secured to one side of the main rib (13), i.e., rear spar (12) extends at both sides of main rib (13), external and internal, but without crossing it. As can be partially seen on Figure 9, main rib (13) comprises intermediate flanges (14) at both sides, external and internal, where the end parts of rear spar (12) can be secured.
This flanges (14) substitute the known L-shaped profiles (10) used in the state of the art in order to join mid-box and trailing edge rib to the rear spar.
Also, according to the embodiment of the invention shown in Figure 6, main rib (13) also comprises a terminal flange (15) so that front spar (11) may be secured directly to the main rib too without using an L-shaped profile.
According to still another possible embodiment of the invention, not depicted, rear spar (12) can be formed by a single piece that crosses through the main rib (13) but without splitting the main rib (13) into two. In this case, for example, main rib (13) comprises a through hole so that rear spar (12) can traverse.

However, in both cases main rib (13) remains a single piece that replaces mid-box rib and trailing edge rib so that rear spar (12) does not split main rib (13) into two parts contrary to what it is known in the state of the art.

Regarding the manufacturing process of the horizontal tail plane of the invention, it comprises the following steps:
- Manufacturing by means of a molding process a main rib (13) in a single piece, the main rib (13) comprising:
   - a length that exceeds the distance between front spar (11) and rear spar (12),
   - an H-shaped profile; and
   - intermediate flanges (14) at both sides, external and internal
- Securing the rear spar (12) to the intermediate flanges (14), and
- After being aligned using jacks or similar, upper and lower skins are joined to the parallel arms of the H-shaped profile that forms the main rib (13).

Also, according to a further embodiment of the invention, main rib (13) is manufactured comprising a through hole so that rear spar (12) can traverse it.

Finally, according to another embodiment of the invention, the main rib (13) also comprises a terminal flange (15) so that front spar (11) may be also secured to the main rib (13) without using an L-shaped profile. In this case, process is simplified with respect to what it is known in the state of the art aforementioned because union between parallel arms of the H-shaped profile forming main rib (13) and upper and lower skins only requires locating, application of shim, drilling, dis-assemblying, cleaning, sealing, final assembly and bolting.

## Claims

1. Horizontal tail plane for an aircraft comprising:
- A leading edge,
- A trailing edge,
- Upper and lower skins including a part of the aerodynamic profiles of the leading edge and the trailing edge,
- A mid-box that forms the structural support for upper and lower skins comprising a front spar (11) and a rear spar (12),
- Leading edge ribs attached to the front spar of the mid-box and to the aerodynamic profile of the leading edge, and
- a one piece main rib (13) attached to the front spar (11) and to the rear spar (12) of the mid-box, the main rib (13) having a length that exceeds the distance between front spar (11) and rear spar (12),
**characterized in that** the main rib (13) is formed by an H-shaped profile and comprises intermediate flanges (14) to secure the rear spar (12).

2. Horizontal tail plane for an aircraft according to claim 1, **characterized in that** the main rib (13) comprises intermediate flanges (14) at both sides.

3. Horizontal tail plane for an aircraft according to any of the previous claims,
**characterized in that** the main rib (13) comprises a terminal flange (15) so that the front spar (11) may be secured directly to the main rib (13).

4. Horizontal tail plane for an aircraft according to any of the previous claims,
**characterized in that** the main rib (13) comprises a through hole so that the rear spar (12) can traverse it.

5. Method for manufacturing a horizontal tail plane **characterized in that** it comprises the following steps:
- Manufacturing a main rib (13) in a single piece by means of a molding process, the main rib (13) comprising:
- a length that exceeds the distance between a front spar (11) and a rear spar (12) of a mid-box that forms the structural support for upper and lower skins of the horizontal tail plane;
- an H-shaped profile; and
- at least an intermediate flange (14) at both sides of the main rib (13),
- Securing the rear spar (12) to the intermediate flange (14), and
- After being aligned using jacks or similar, the upper and lower skins are joined to the parallel arms of the H-shaped profile that forms the main rib (13).

6. Method for manufacturing a horizontal tail plane according to claim 5, **characterized in that** the main rib (13) comprises a through hole so that the rear spar (12) can traverse it.

7. Method for manufacturing a horizontal tail plane according to claim 5 or 6, **characterized in that** the main rib (13) comprises a terminal flange (15) so that the front spar (11) may be secured to the main rib (13).

## Patentansprüche

1. Höhenleitwerk für ein Fluggerät, das aufweist:
- eine Vorderkante,
- eine Hinterkante,
- eine obere und eine untere Verkleidung, die einen Teil der aerodynamischen Profile der Vorderkante und der Hinterkante aufweisen,
- einen Mittelkasten, der den strukturellen Halt für die obere und untere Verkleidung bildet und der einen Vorderholm (11) und einen Hinterholm (12) aufweist,
- Rippen der Vorderkante, die an dem Vorderholm des Mittelkastens und an dem aerodynamischen Profil der Vorderkante befestigt sind, und
- eine einteilige Hauptrippe (13), die an dem Vorderholm (11) und an dem Hinterholm (12) des Mittelkastens befestigt ist, wobei die Hauptrippe (13) eine Länge hat, die den Abstand zwischen dem Vorderholm (11) und dem Hinterholm (12) überschreitet,
**dadurch gekennzeichnet, dass** die Hauptrippe (13) durch ein H-förmiges Profil ausgebildet ist und Zwischenflansche (14) aufweist, um den Hinterholm (12) zu befestigen.

2. Höhenleitwerk für ein Fluggerät nach Anspruch 1, **dadurch gekennzeichnet, dass** die Hauptrippe (13) auf beiden Seiten Zwischenflansche (14) aufweist.

3. Höhenleitwerk für ein Fluggerät nach einem der vorhergehenden Ansprüche, **dadurch gekennzeichnet, dass** die Hauptrippe (13) einen Abschlussflansch (15) aufweist, so dass der Vorderholm (11) direkt an der Hauptrippe (13) befestigt werden kann.

4. Höhenleitwerk für ein Fluggerät nach einem der vorhergehenden Ansprüche, **dadurch gekennzeichnet, dass** die Hauptrippe (13) ein Durchgangsloch aufweist, so dass der Hinterholm (12) sie durchqueren kann.

5. Verfahren zur Herstellung eines Höhenleitwerks, **dadurch gekennzeichnet, dass** es die folgenden Schritte aufweist:
- Herstellen einer Hauptrippe (13) in einem Teil mittels eines Formungsverfahrens, wobei die Rippe (13) aufweist:
- eine Länge, die den Abstand zwischen einem Vorderholm (11) und einem Hinterholm (12) eines Mittelkastens, der den strukturellen Halt für eine obere und eine untere Verkleidungen des Höhenleitwerks bildet, überschreitet;
- ein H-förmiges Profil; und
- wenigstens einen Zwischenflansch (14) auf beiden Seiten der Hauptrippe (13),
- Befestigen des Hinterholms (12) an dem Zwischenflansch (14), und
- nachdem sie unter Verwendung von Hebern oder Ähnlichem ausgerichtet wurden, Verbinden der oberen und unteren Verkleidung mit den parallelen Armen des H-förmigen Profils, das die Hauptrippe (13) bildet.

6. Verfahren zur Herstellung eines Höhenleitwerks nach Anspruch 5, **dadurch gekennzeichnet, dass** die Hauptrippe (13) ein Durchgangsloch aufweist, so dass der Hinterholm (12) sie durchqueren kann.

7. Verfahren zur Herstellung eines Höhenleitwerks nach Anspruch 5 oder 6, **dadurch gekennzeichnet, dass** die Hauptrippe (13) einen Abschlussflansch (15) aufweist, so dass der Vorderholm (11) an der Hauptrippe (13) befestigt werden kann.

## Revendications

1. Empennage horizontal pour un aéronef, comprenant
- un bord d'attaque,
- un bord de fuite,
- des revêtements d'extrados et d'intrados incluant une partie des profilés aérodynamiques du bord d'attaque et du bord de fuite,
- un compartiment médian qui forme le support structurel des revêtements d'extrados et d'intrados comprenant un longeron avant (11) et un longeron arrière (12),
- des nervures de bord d'attaque attachées au longeron avant du caisson central et au profilé aérodynamique du bord d'attaque et
- une nervure forte monobloc (13) attachée au longeron avant (11) et au longeron arrière (12) du caisson central, la nervure forte (13) ayant une longueur qui excède la distance entre le longeron avant (11) et le longeron arrière (12),
**caractérisé en ce que** la nervure forte (13) est formée par un profilé en H et comprend des brides intermédiaires (14) pour fixer le longeron arrière (12)

2. Empennage horizontal pour un aéronef selon la revendication 1, **caractérisé en ce que** la nervure forte (13) comprend des brides intermédiaires (14) des deux côtés.

3. Empennage horizontal pour un aéronef selon l'une quelconque des revendications précédentes, **caractérisé en ce que** la nervure forte (13) comprend une bride terminale (15) de sorte que le longeron avant (11) peut être fixé directement sur la bride principale (13).

4. Empennage horizontal pour un aéronef selon l'une quelconque des revendications précédentes, **caractérisé en ce que** la nervure forte (13) comprend un trou traversant de sorte que le longeron arrière (12) peut la traverser.

5. Procédé pour fabriquer un empennage horizontal **caractérisé en ce qu'**il comprend les étapes suivantes :
- la fabrication d'une nervure forte (13) monobloc au moyen d'un processus de moulage, la nervure forte possédant
- une longueur qui excède la distance entre le longeron avant (11) et le longeron arrière (12) d'un caisson central qui forme le support structurel des revêtements d'extrados et d'intrados de l'empennage horizontal,
- un profilé en H et
- au moins une bride intermédiaire (14) des deux côtés de la nervure forte,
- la fixation du longeron arrière (12) sur la bride intermédiaire (14) et
- Après leur alignement au moyen de vérins ou autre, la liaison des revêtements d'extrados et d'intrados aux bras parallèles du profilé en H qui forme la nervure forte (13).

6. Procédé pour fabriquer un empennage horizontal selon la revendication 5, **caractérisé en ce que** la nervure forte (13) comprend un trou traversant de sorte que le longeron arrière (12) peut la traverser.

7. Procédé pour fabriquer un empennage horizontal selon les revendications 5 ou 6, **caractérisé en ce que** la nervure forte (13) comprend une bride terminale (15) de sorte que le longeron avant (11) peut être fixé sur la nervure forte (13).
